# EUROPÄISCHE PATENTSCHRIFT

(11) **EP 1 476 987 B1**
(45) Veröffentlichungstag und Bekanntmachung des Hinweises auf die Patenterteilung: **10.08.2005**
(21) Anmeldenummer: 03742913.1
(22) Anmeldetag: 21.02.2003
(51) Int. Cl.: H04L 12/407, H04L 12/437, H04L 12/26

(54) **LOKALES NETZWERK, INSBESONDERE ETHERNET-NETZWERK MIT REDUNDANZEIGENSCHAFTEN SOWIE KOPPELGERÄT FÜR EIN DERARTIGES NETZWERK**
LOCAL NETWORK, PARTICULARLY ETHERNET NETWORK HAVING REDUNDANCY PROPERTIES, AND COUPLING DEVICE FOR SUCH A NETWORK
RESEAU LOCAL, EN PARTICULIER RESEAU ETHERNET PRESENTANT DES PROPRIETES DE REDONDANCE ET APPAREIL DE COUPLAGE DESTINE A UN RESEAU DE CE TYPE

(30) Priorität: 22.02.2002 DE 10207527
(43) Veröffentlichungstag der Anmeldung: 17.11.2004
(73) Patentinhaber: Siemens Aktiengesellschaft, 80333 München (DE)
(72) Erfinder: KÖSTNER, Michael, 76187 Karlsruhe (DE); THRUM, Harald, 76297 Stutensee (DE)
(86) Internationale Anmeldenummer: PCT/DE2003/000553
(87) Internationale Veröffentlichungsnummer: WO 2003/073703

(56) Entgegenhaltungen:
- WO-A-99/46908
- DE-A- 10 004 432
- US-B1- 6 308 282

## Beschreibung

Die Erfindung betrifft ein lokales Netzwerk, insbesondere ein Ethernet-Netzwerk, mit Redundanzeigenschaften nach dem Oberbegriff des Anspruchs 1 sowie ein Koppelgerät für ein derartiges Netzwerk nach dem Oberbegriff des Anspruchs 6.

Aus der WO 99/46908 ist bereits ein lokales Ethernet-Netzwerk mit Redundanzeigenschaften bekannt. In dem dort beschriebenen Netzwerk sind Koppelgeräte und ein Redundanzmanager, die jeweils zumindest zwei Ports aufweisen und als Layer-2-Komponenten ausgeführt sind, jeweils durch Verbindung zweier Ports einander benachbarter Geräte in einer ringförmigen Topologie miteinander verschaltet. Der Ausdruck "Layer-2-Komponenten" hat dabei die Bedeutung, dass in den Geräten zumindest die Schichten 1 und 2 des ISO-OSI-7-Schichtenmodells implementiert sind. Die Geräte führen somit eine Adressauswertung und Telegrammweglenkung durch. Im Normalbetrieb, d. h. wenn kein Fehler im Netzwerk aufgetreten ist, ist der Ring durch den Redundanzmanager aufgetrennt. Dies bedeutet, dass Telegramme, die der Redundanzmanager an seinem einen, im Ring befindlichen Port empfängt, nicht über den anderen, im Ring befindlichen Port weitergeleitet sondern blockiert werden. Dieser Zustand wird durch einen geöffneten Schalter symbolisiert. Aus logischer Sicht handelt es sich somit um ein Netzwerk mit linienförmiger Topologie, bei welchem die beiden Linienenden des Netzwerks an einen Redundanzmanager angeschlossen sind, der im fehlerfreien Fall die beiden Linienenden voneinander trennt. Im Fehlerfall, d. h. wenn außerhalb des Redundanzmanagers an irgendeiner Stelle des Netzwerks eine Unterbrechung entsteht, verbindet der Redundanzmanager die beiden Linienenden, so dass wiederum eine linienförmige Topologie entsteht.

Physikalisch gesehen handelt es sich dabei jedoch um eine ringförmige Netzwerktopologie, bei welcher die Geräte jeweils durch Verbinden zweier Ports einander benachbarter Geräte einen Ring bilden. Der Redundanzmanager stellt dabei sicher, dass der Ring zu jedem Zeitpunkt an lediglich einer Stelle unterbrochen ist. Zur Prüfung, ob außerhalb des Redundanzmanagers bereits eine Unterbrechung des Rings vorliegt, d. h. ob das Netzwerk fehlerfrei arbeitet, speist der Redundanzmanager in vorgegebenen Zeitintervallen Testtelegramme über die beiden Ports, mit welchen er in den Ring geschaltet ist, in den Ring ein und trennt den Ring zur Herstellung einer im Hinblick auf die Übertragungslogik linienförmigen Topologie auf, falls innerhalb eines weiteren vorgegebenen Zeitintervalls die Testtelegramme am jeweils anderen Port empfangen werden. Andernfalls, d. h., wenn innerhalb des weiteren Zeitintervalls zumindest ein Testtelegramm am jeweils anderen Port empfangen wurde, schließt der Redundanzmanager die Verbindung, so dass das Netzwerk wiederum in einer logisch linienförmigen Topologie aus einer zusammenhängenden Linie besteht. Bezüglich weiterer Ausgestaltungen und Vorteile eines derartigen lokalen Netzwerks und eines Redundanzmanagers wird auf die eingangs bereits genannte WO 99/46908 verwiesen.

Die Druckschrift DE 1000 4432 beseitigt schleiten und erhöht die Verfügbar keit eines Netzwerks.

Netzwerke, in welchen Telegramme von Knoten zu Knoten verteilt werden und in welchen auf den Ausfall einer Kommunikationsstrecke zwischen zwei Knoten mit dem Zuschalten eines redundanten Kommunikationsweges reagiert wird, sind mit der Gefahr behaftet, dass Nachrichten vervielfältigt werden oder im Netzwerk kreisen. Derartige Fehlerfälle können dadurch ausgelöst werden, dass ein redundanter Kommunikationsweg fälschlicherweise zugeschaltet wird. Durch eine Fehlfunktion des bekannten Redundanzmanagers könnte es zu einem versehentlichen Verbinden der beiden Linienenden kommen und somit eine auch in logischer Hinsicht ringförmige Topologie des Netzwerks entstehen. Dies kann dazu führen, dass Telegramme in dem Ring kreisen. Im schlimmsten Fall wird die maximal für den Datenverkehr zur Verfügung stehende Bandbreite des Netz-werks belegt, so dass weiterer Nutzdatenverkehr zwischen den am Netzwerk angeschlossenen Teilnehmern nicht mehr übertragen werden kann. Bei Auftreten eines derartigen Fehlers ist das Netzwerk für angeschlossene Teilnehmer somit nicht oder in geringerem Maße verfügbar.

Der Erfindung liegt die Aufgabe zugrunde, ein lokales Netzwerk, insbesondere ein Ethernet-Netzwerk, mit Redundanzeigenschaften zu schaffen, das sich durch eine weiter erhöhte Verfügbarkeit des Netzwerks für die Übertragung von Nutzdaten daran angeschlossener Teilnehmer auszeichnet. Zudem soll ein Koppelgerät geschaffen werden, mit welchem diese Aufgabe in einem Netzwerk gelöst werden kann.

Zur Lösung dieser Aufgabe weist das neue lokale Netzwerk der eingangs genannten Art die im kennzeichnenden Teil des Anspruchs 1 angegebenen Merkmale auf. Vorteilhafte Weiterbildungen der Erfindung sind in den abhängigen Ansprüchen beschrieben. In Anspruch 6 ist ein Koppelgerät für ein derartiges Netzwerk angegeben.

Die Erfindung hat den Vorteil, dass die Überwachung des Redundanzmanagers auf korrekte Funktion unabhängig von diesem erfolgt. Die Überwachung kann somit nicht durch Fehler innerhalb des Redundanzmanagers gestört oder unmöglich gemacht werden. Ein versehentliches Schließen der Netzwerkverbindung durch den Redundanzmanager wird durch den so genannten Redundanzmanager-Observer anhand eigener Testtelegramme schnell erkannt, die der Redundanzmanager-Observer versendet und auswertet. Auftretende Fehler werden durch Auftrennen des Rings ohne größere Verzögerungen behoben. Damit wird die Verfügbarkeit des lokalen Netzwerks erhöht.

Eine Signalisierung eines derartigen Fehlers durch den Redundanzmanager-Observer hat den Vorteil, dass geeignete Maßnahmen zur Fehlerbehebung, beispielsweise ein Austausch oder eine Reparatur des Redundanzmanagers, ergriffen werden können. Zudem werden Fehler während der Inbetriebnahme, beispielsweise eine falsche Projektierung des Redundanzmanagers, erkannt.

Im Normalfall, d. h. im fehlerfreien Betrieb, werden erste Testtelegramme des Redundanzmanagers durch den Redundanzmanager-Observer transparent weitergeleitet und zweite Testtelegramme, die der Redundanzmanager-Observer in den Ring eingespeist hat, bei Empfang durch den Redundanzmanager-Observer vom Ring heruntergenommen, d. h. nicht weitergeleitet. In entsprechender Weise werden zweite Testtelegramme durch den Redundanzmanager transparent weitergeleitet, falls dieser die Verbindung geschlossen hat. Die zweiten Testtelegramme werden jedoch durch den Redundanzmanager blockiert, d. h. nicht weitergeleitet, falls dieser den Ring aufgetrennt hat. Die zweiten Testtelegramme von den ersten Testtelegrammen verschieden auszuführen hat den Vorteil, dass diese Funktionen des Redundanzmanagers und des Redundanzmanager-Observers bereits nach Erkennen des jeweiligen Telegrammtyps entsprechend ausgeführt werden können. Eine aufwendige Abstimmung der Sendezeitpunkte von ersten und zweiten Testtelegrammen zwischen Redundanzmanager und Redundanzmanager-Observer und eine Unterscheidung anhand der zeitlichen Lage der Testtelegramme, die alternativ zur Unterscheidung der Telegrammtypen anhand der Telegramme selbst durchgeführt werden könnte, ist somit nicht erforderlich.

In vorteilhafter Weise wird eine weitere Verringerung der Ausfallwahrscheinlichkeit erreicht, wenn alle Koppelgeräte, die in der ringförmigen Topologie miteinander verschaltet sind, als Redundanzmanager-Observer ausgebildet werden. Damit ist auch eine Überwachung der Funktion eines Redundanzmanager-Observers durch andere Redundanzmanager-Observer gewährleistet. Hierbei können sich die Redundanzmanager-Observer untereinander mit Hilfe eines Protokolls abstimmen, um die gültige Netzwerktopologie festzulegen. Im einfachsten Fall genügt aber bereits das Austauschen von Synchronisationstelegrammen zwischen den Redundanzmanager-Observern.

Ein weiteres Überwachungsprinzip, das zudem in vorteilhafter Weise ohne Belastung des Netzwerks mit zusätzlichen Testtelegrammen auskommt, wird darin gesehen, dass der Redundanzmanager in den ersten Testtelegrammen den jeweiligen Zustand "Ring aufgetrennt" oder "Verbindung geschlossen" anzeigt und dass ein Koppelgerät, welches im Ring dem Redundanzmanager benachbart ist, den Ring auftrennt, wenn mehr als nur erste Testtelegramme an dem Port empfangen werden, an welchem der Redundanzmanager angeschlossen ist, und wenn in dem zuletzt empfangenen ersten Testtelegramm der Zustand "Ring aufgetrennt" vom Redundanzmanager angezeigt wurde. Dieses Überwachungsprinzip ergänzt in vorteilhafter Weise die Überwachung des Redundanzmanagers durch den Redundanzmanager-Observer mit eigenen, zweiten Testtelegrammen und führt somit zu einer weiteren Verringerung der Ausfallwahrscheinlichkeit des Netzwerks.

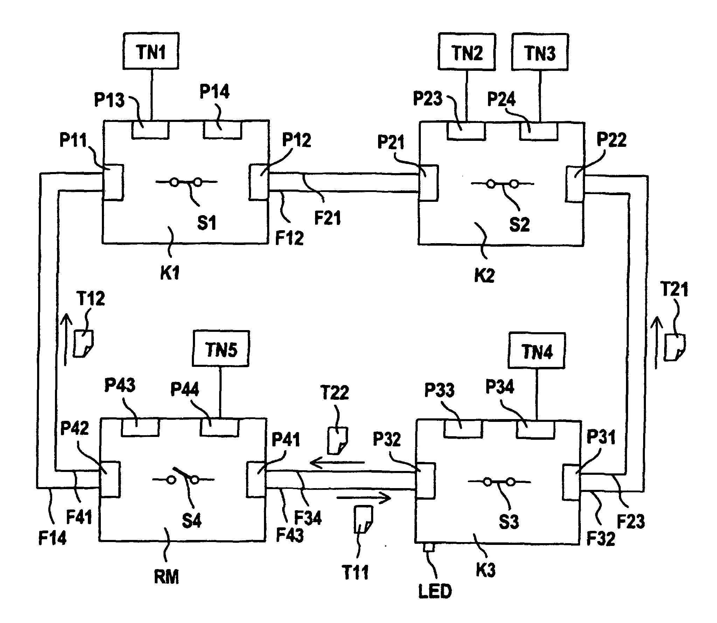

Anhand der Zeichnung, in der ein Ausführungsbeispiel der Erfindung dargestellt ist, werden im Folgenden die Erfindung sowie Ausgestaltungen und Vorteile näher erläutert.

In einem Netzwerk sind vier Koppelgeräte K1, K2, K3 und RM, wobei das Koppelgerät RM als Redundanzmanager betrieben wird, miteinander verbunden. Die Koppelgeräte weisen jeweils vier Ports P11...P19, P21...P24, P31...P34 bzw. P41... P44 auf, an welche Verbindungsleitungen zum Empfang und zum Senden von Telegrammen anschließbar sind. Die Koppelgeräte K1 bis K3 und RM sind als Layer-2-Komponenten ausgeführt, d. h. sie führen entsprechend einer intern abgelegten Adresstabelle eine Telegrammweglenkung durch. Sie sind durch Verbinden zweier Ports einander benachbarter Geräte in einer ringförmigen Topologie miteinander verschaltet. Dazu sind die Ports P12 und P21 durch Fasern F12 und F21 eines Glasfaserkabels miteinander verbunden. Alternativ dazu kann selbstverständlich Kupferkabel benutzt werden. Die Faser F12 dient zur Übertragung von Telegrammen vom Port P12 des Koppelgeräts K1 zum Port P21 des Koppelgeräts K2. In der Gegenrichtung werden Telegramme vom Port P21 des Koppelgeräts K2 über die Faser F21 zum Port P12 des Koppelgeräts K1 übertragen. Auf diese Weise ist eine so genannte Fullduplex-Übertragung möglich, bei welcher Telegramme in beiden Richtungen gleichzeitig übertragen werden können. In entsprechender Weise sind die Ports P22 und P31 durch Fasern F23 und F32, die Ports P32 und P41 durch Fasern F34 und F43 sowie die Ports P42 und P11 durch Fasern F41 und F14 miteinander verbunden. An den Port P13 des Koppelgeräts K1 ist ein Teilnehmer TN1, an den Port P23 des Koppelgeräts K2 ein Teilnehmer TN2, an den Port P24 des Koppelgeräts K2 ein Teilnehmer TN3, an den Port P34 des Koppelgeräts K3 ein Teilnehmer TN4 und an dem Port P44 des Koppelgeräts RM ein Teilnehmer TN5 angeschlossen. Diese Teilnehmer können z. B. Automatisierungsgeräte, Bedien- und Beobachtungsstationen, Server, Drucker, weitere Netzsegmente usw. sein.

In logischer Hinsicht handelt es sich bei fehlerfreiem Betrieb des Netzwerks um ein lokales Netzwerk mit linienförmiger Topologie, da der Ring beim Koppelgerät RM, das als Redundanzmanager betrieben wird, unterbrochen ist. Diese Unterbrechung ist durch einen Schalter S4 angedeutet. Entsprechende Schalter S1, S2 und S3 in den Koppelgeräten K1, K2 bzw. K3 sind geschlossen. Beispielsweise bedeutet ein geschlossener Schalter S1 des Koppelgeräts K1, dass durch das Koppelgerät K1 in der Linie durchzuschaltende Telegramme vom Empfangsport, beispielsweise dem Port P11, zum Sendeport, beispielsweise dem Port P12, transparent durchgeschaltet werden. Dasselbe ist auch in umgekehrter Richtung der Fall. Im Fehlerfall, d. h. wenn eine Unterbrechung in der dargestellten Linie entsteht, verbindet der Redundanzmanager die beiden Linienenden miteinander, d. h., er leitet am Port P41 empfangene Nachrichten über den Port P42 weiter und umgekehrt, wenn diese durchzuschalten und nicht an den Teilnehmer TN5 gerichtet sind. Das entspricht einem Schalter S4 in geschlossener Stellung. Zur Überwachung der Linie auf Unterbrechungsfreiheit speist der Redundanzmanager RM in ersten vorgegebenen Zeitintervallen erste Testtelegramme T11 und T12 über die beiden Ports P41 bzw. P42, mit welchen er in den Ring geschaltet ist, in den Ring ein. Falls innerhalb eines zweiten vorgegebenen Zeitintervalls diese ersten Telegramme T11 und T12 am jeweils anderen Port P42 bzw. P41 empfangen werden, liegt keine Unterbrechung der Linie vor und der Ring wird zur Herstellung oder - je nach Vorzustand - Beibehaltung einer linienförmigen Topologie aufgetrennt, d. h. der Schalter S4 wird bzw. bleibt geöffnet. Wenn innerhalb des zweiten Zeitintervalls die ersten Testtelegramme T11 oder T12 nicht am jeweils anderen Port P42 bzw. P41 empfangen werden, liegt ein Fehlerfall vor und die Linie ist unterbrochen. Der Fehler wird somit erkannt und der Schalter S4 geschlossen, so dass eine funktionsfähige Linie wieder hergestellt und die Kommunikation weiterhin gewährleistet ist. Bei der Vorgabe des ersten und des zweiten Zeitintervalls sind die maximale Umlaufzeit von Telegrammen im Netzwerk sowie die maximal zulässige Rekonfigurationszeit zu berücksichtigen. Da diese Rekonfiguration des Netzwerks bei geeigneter Wahl der Zeitinvervalle vergleichsweise schnell erfolgt, ist sichergestellt, dass die angeschlossenen Teilnehmer keine logischen Kommunikationsverbindungen abbauen und die Kommunikation ohne Störungen weiterläuft sowie eine mit dem Netzwerk realisierte Automatisierungslösung unbeeinflusst bleibt.

Wenn nun der Redundanzmanager RM aufgrund eines inneren Fehlers auch ohne Unterbrechung im übrigen Teil des Rings den Schalter S4 schließen würde, könnten im Ring kreisende Telegramme entstehen. Dies wäre beispielsweise der Fall, wenn die Software des Redundanzmanagers RM aufgrund eines Software- oder Logikfehlers fälschlicherweise Telegramme durchschalten würde, obwohl im übrigen Teil des Rings keine Unterbrechung vorliegt. Solche Fehler könnten somit die Verfügbarkeit des Netzwerks beeinträchtigen. Um dies zu vermeiden, wird beispielsweise das Koppelgerät K3 als so genannter Redundanzmanager-Observer betrieben. In analoger Weise könnten auch sämtliche Koppelgeräte im gezeigten Ausführungsbeispiel auch die Koppelgeräte K1 und K2, betrieben werden. Zum Verständnis der Erfindung genügt jedoch die Beschreibung anhand des Koppelgeräts K3. Dieses sendet zur Überwachung des Redundanzmanagers RM ebenfalls in dritten vorgegebenen Zeitintervallen zweite Testtelegramme T21 und T22 über die Ports P31 bzw. P32 in den Ring. Erreichen die beiden Testtelegramme T21 und T22 innerhalb eines vierten vorgegebenen Zeitintervalls nicht den jeweils anderen Port P32 bzw. P31 des Koppelgeräts K3, so liegt im verbleibenden Rest des Rings eine Unterbrechung vor. Der Schalter 53 bleibt geschlossen. Sollte der Redundanzmanager RM fälschlicherweise den Ring schließen, so gelangen die zweiten Testtelegramme T21 und T22 zum Port P32 bzw. P31. Damit würde ein Kurzschluss des Rings erkannt. Das Koppelgerät K3 öffnet in diesem Fall den Schalter S3, so dass in logischer Hinsicht insgesamt wieder eine linienförmige Netzwerktopologie entsteht. Die Festlegung des dritten und des vierten Zeitintervalls kann analog zur Wahl des ersten und des zweiten Zeitintervalls erfolgen. Nach einer kurzen Rekonfigurationszeit ist das Netzwerk somit weiter betriebsbereit. Wie bereits oben angeführt, können in analoger Weise auch die Koppelgeräte K1 und K2 die beschriebene Funktion eines Redundanzmanager-Observers erfüllen. Das hat den Vorteil, dass auch Fehler des Koppelgeräts K3 erkannt werden. Ein erkannter Fehler des Redundanzmanagers RM wird durch das Koppelgerät K3 mit einer Leuchtdiode LED angezeigt. Damit können geeignete Maßnahmen zur Fehlerbehebung eingeleitet werden. Eine andere Möglichkeit zur Fehleranzeige ist beispielsweise das Senden eines Fehlermeldetelegramms an eine zentrale Netzwerk-Management-Station.

Durch die beschriebene Überwachung des Redundanzmanagers durch einen Redundanzmanager-Observer können auch Fehler erkannt werden, bei welchen zwar die Software des Redundanzmanagers RM einen fehlerfreien Betrieb des verbleibenden Rests des Rings erkennt, sich die Hardware des Redundanzmanagers RM jedoch fehlerhaft verhält und fälschlicherweise den Schalter S4 schließt. Wenn für derartige Fehler keine eindeutigen Indikatoren im Redundanzmanager RM selbst vorhanden sind, kann dieser den Fehler nicht feststellen. Ein solcher Fehler ist kaum völlig zu vermeiden, da bereits ein einziger Bitfehler in den komplexen Hardware-Schaltungsteilen des Redundanzmanagers RM, die den hier vereinfacht als Schalter S4 dargestellten Teil realisieren, zu einem solchen Fehler führen können. Ein schnelles Erkennen derartiger Fehler wird mit der folgenden Überwachungsart erreicht. Dabei wird vorausgesetzt, dass der Redundanzmanager RM in den Testtelegrammen T11 und T12 den jeweiligen Zustand, beispielsweise "Ring aufgetrennt" oder "Verbindung geschlossen" anzeigt. Das Koppelgerät K3, das als Redundanzmanager-Observer ausgebildet ist, wertet die an seinem Port P32, über welchen es direkt mit dem Redundanzmanager RM verbunden ist, eingehenden Telegramme aus. Eine Fehlfunktion des Redundanzmanagers RM liegt dann vor, wenn in den Testtelegrammen T11 der Zustand "Ring aufgetrennt" angezeigt wird und wenn auch andere Telegramme als die Testtelegramme T11 am Port P32 empfangen werden. Wenn diese beiden Bedingungen erfüllt sind, öffnet das Koppelgerät K3 seinen Schalter S3 und zeigt mit seiner Leuchtdiode LED einen Fehler des Redundanzmanagers RM an. Ist eine der beiden Bedingungen nicht mehr erfüllt, schließt das Koppelgerät K3 erneut seinen Schalter S3. Damit ist eine Überprüfung der Funktion des Redundanzmanagers RM möglich, ohne das Netzwerk mit zusätzlichen Testtelegrammen eines Redundanzmanager-Observers zu belasten. Zudem werden eine schnelle Erkennung derartiger Fehler und eine schnelle Netzrekonfiguration erreicht.

Der Redundanzmanager-Observer (Koppelgerät K3) überprüft die Entscheidung des Redundanzmanagers RM, den Ring zu schließen, indem er selbst zweite Telegramme T21 und T22 aussendet. Wenn er vom Redundanzmanager RM die Information erhalten hat, dass dieser den Ring geschlossen hat, der Redundanzmanager-Observer selbst jedoch seine an einem Ringport, beispielsweise dem Port P31, ausgesendeten zweiten Testtelegramme am anderen Ringport, für dieses Beispiel der Port P32, wieder empfängt, geht der Redundanzmanager-Observer davon aus, dass der Redundanzmanager unberechtigterweise den Schalter S4 geschlossen hat. Als Reaktion hierauf öffnet der Redundanzmanager-Observer (Koppelgerät K3) den Ring mit seinem Schalter S3 und signalisiert das Fehlverhalten des Redundanzmanagers.

## Patentansprüche

1. Lokales Netzwerk, insbesondere Ethernet-Netzwerk, mit Redundanzeigenschaften, in welchem Koppelgeräte (K1, K2, K3) und ein Redundanzmanager (RM), die jeweils zumindest zwei Ports (P11, P12, P21, P22, P31, P32, P41, P42) aufweisen, als Layer-2-Komponenten ausgeführt sind und jeweils durch Verbinden zweier Ports einander benachbarter Geräte in einer ringförmigen Topologie miteinander verschaltet sind, wobei der Redundanzmanager (RM) dazu ausgebildet ist, in vorgegebenen Zeitintervallen erste Testtelegramme (T11, T12) über die beiden Ports (P41, P42), mit welchen er in den Ring geschaltet ist, in den Ring einzuspeisen und zur Herstellung einer linienförmigen Topologie, falls innerhalb eines vorgegebenen Zeitintervalls die ersten Testtelegramme (T11, T12) am jeweils anderen Port (P42, P41) empfangen werden, den Ring aufzutrennen und andernfalls die Verbindung zu schließen,
**dadurch gekennzeichnet, dass** zumindest eines der Koppelgeräte (K3) als so genannter Redundanzmanager-Observer dazu ausgebildet ist, zur Überwachung des Redundanzmanagers (RM) ebenfalls in vorgegebenen Zeitintervallen zweite Testtelegramme (T21, T22) über die beiden Ports (P31, P32), mit welchen es in den Ring geschaltet ist, in den Ring einzuspeisen und zur Herstellung einer linienförmigen Topologie, falls innerhalb eines vorgegebenen Zeitintervalls die zweiten Testtelegramme (T21, T22) am jeweils anderen Port (P32, P31) empfangen werden, den Ring aufzutrennen und andernfalls die Verbindung zwischen den Ports (P31, P32) zu schließen.

2. Lokales Netzwerk nach Anspruch 1, **dadurch gekennzeichnet, dass** der Redundanzmanager-Observer dazu ausgebildet ist, im Falle des Empfangs eines zweiten Testtelegramms einen Fehler des Redundanzmanagers zu signalisieren.

3. Lokales Netzwerk nach Anspruch 1 oder 2, **dadurch gekennzeichnet, dass** die zweiten Testtelegramme (T21, T22) von den ersten Testtelegrammen (T11, T12) verschieden sind.

4. Lokales Netzwerk nach einem der vorhergehenden Ansprüche, **dadurch gekennzeichnet, dass** alle Koppelgeräte (K1, K2, K3), die mit dem Redundanzmanager (RM) in einer ringförmigen Topologie verschaltet sind, als Redundanzmanager-Observer ausgebildet sind.

5. Lokales Netzwerk nach einem der vorhergehenden Ansprüche, **dadurch gekennzeichnet, dass** der Redundanzmanager (RM) dazu ausgebildet ist, in den ersten Testtelegrammen (T11, T12) den jeweiligen Zustand "Ring aufgetrennt" oder "Verbindung geschlossen" anzuzeigen und dass ein Koppelgerät (K3), welches im Ring dem Redundanzmanager (RM) benachbart ist, als Redundanzmanager-Observer weiterhin dazu ausgebildet ist, Telegramme, welche es an seinem mit dem Redundanzmanager (RM) verbundenen Port (P32) empfängt, auszuwerten, und den Ring zur Herstellung einer linienförmigen Topologie aufzutrennen und einen Fehler zu signalisieren, wenn mehr als nur erste Testtelegramme (T11) an diesem Port (P32) empfangen wurden und wenn in dem zuletzt empfangenen ersten Testtelegramm (T11) der Zustand "Ring aufgetrennt" vom Redundanzmanager (RM) angezeigt wurde.

6. Koppelgerät für ein lokales Netzwerk nach einem der vorhergehenden Ansprüche, **dadurch gekennzeichnet, dass** es als so genannter Redundanzmanager-Observer dazu ausgebildet ist, zur Überwachung des Redundanzmanagers (RM) ebenfalls in vorgegebenen Zeitintervallen zweite Testtelegramme (T21, T22) über die beiden Ports (P31, P32), mit welchen es in den Ring geschaltet ist, in den Ring einzuspeisen und zur Herstellung einer linienförmigen Topologie, falls innerhalb eines vorgegebenen Zeitintervalls die zweiten Testtelegramme (T21, T22) am jeweils anderen Port (P32, P31) empfangen werden, den Ring aufzutrennen und andernfalls die Verbindung zu schließen.

## Claims

1. Local area network, in particular an Ethernet network, having redundant characteristics, in which coupling appliances (K1, K2, K3) and a redundancy manager (RM) which each have at least two ports (P11, P12, P21, P22, P31, P32, P41, 42) are in the form of layer-2 components, and are each connected to one another by connection of two ports of mutually adjacent appliances in a ring topology, with the redundancy manager (RM) being designed to feed first test messages (T11, T12) into the ring at predetermined time intervals via the two ports (P41, P42) by means of which it is connected in the ring, and to disconnect the ring in order to produce a linear topology if the first test messages (T11, T12) are received at the respective other port (P42, P41) within a predetermined time interval, and otherwise to make the connection,
**characterized in that** at least one of the coupling appliances (K3) is in the form of a so-called redundancy manager observer, for the purpose of feeding second test messages (T21, T22) into the ring, likewise at predetermined time intervals, via the two ports (P31, P32) by means of which it is connected in the ring, in order to monitor the redundancy manager (RM), and to disconnect the ring in order to produce a linear topology if the second test messages (T21, T22) are received at the respective other port (P32, P31) within a predetermined time interval, and otherwise to make the connection between the ports (P31, P32).

2. Local area network according to Claim 1, **characterized in that** the redundancy manager observer is designed for the purpose of signalling a fault in the redundancy manager if a second test message is received.

3. Local area network according to Claim 1 or 2, **characterized in that** the second test messages (T21, T22) are not the same as the first test messages (T11, T12).

4. Local area network according to one of the preceding claims, **characterized in that** all of the coupling appliances (K1, K2, K3) which are connected to the redundancy manager (RM) in a ring topology are in the form of redundancy manager observers.

5. Local area network according to one of the preceding claims, **characterized in that** the redundancy manager (RM) is designed for the purpose of indicating the respective state "ring disconnected" or "connection made" in the first test messages (T11, T12), and **in that** a coupling appliance (K3) which is adjacent to the redundancy manager (RM) in the ring is also in the form of a redundancy manager observer for the purpose of evaluating messages which it receives at its port (P32) that is connected to the redundancy manager (RM), and to disconnect the ring for production of a linear topology and to signal a fault when more than only first test messages (T11) have been received at this port (P32) and when the state "ring disconnected" was indicated by the redundancy manager (RM) in the most recently received first test message (T11).

6. Coupling appliance for a local area network according to one of the preceding claims, **characterized in that** the coupling appliance is in the form of a so-called redundancy manager observer for the purpose of feeding second test messages (T21, T22) into the ring, likewise at predetermined time intervals, via the two ports (P31, P32) by means of which it is connected in the ring, in order to monitor the redundancy manager (RM), and to disconnect the ring in order to produce a linear topology if the second test messages (T21, T22) are received at the respective other port (P32, P31) within a predetermined time interval, and otherwise to make the connection.

## Revendications

1. Réseau local, notamment réseau éthernet, ayant des propriétés de redondance, dans lequel des appareils (K1, K2, K3) de connexion et un gestionnaire (RM) de redondance, qui ont, respectivement, au moins deux accès (P11, P12, P21, P22, P31, P32, P41, P42), sont réalisés en layer-2 et sont connectés entre eux par liaison de deux accès d'appareils voisins suivant une topologie annulaire, le gestionnaire (RM) de redondance étant constitué de façon à injecter dans l'anneau à des intervalles de temps prescrits des premiers télégrammes (T11, T12) de test par les deux accès (P41, P42) par lesquels il est monté dans l'anneau et, pour la production d'une topologie linéaire, à séparer l'anneau et à fermer la liaison d'une autre façon dans le cas où, dans un intervalle de temps prescrit, les premiers télégrammes (T11, T12) de test sont reçus à, respectivement, l'autre accès (P42, P41), **caractérisé en ce qu'**au moins l'un des appareils (K3) de connexion est constitué sous la forme de ce que l'on appelle un gestionnaire de redondance-observateur pour injecter dans l'anneau pour le contrôle du gestionnaire (RM) de redondance, également dans des intervalles de temps prescrits, des deuxièmes télégrammes (T21, T22) de test par les deux accès (P31, P32) par lesquels il est monté dans l'anneau et pour séparer l'anneau et fermer d'une autre façon la liaison entre les accès (P31, P32) pour la production d'une topologie linéaire dans le cas où les deuxièmes télégrammes (T21, T22) de test sont reçus dans un intervalle de temps prescrit à, respectivement, l'autre accès (P32, P31).

2. Réseau local suivant la revendication 1, **caractérisé en ce que** le gestionnaire de redondance-observateur est conçu de façon à signaler dans le cas de la réception d'un deuxième télégramme de test un défaut du gestionnaire de redondance.

3. Réseau local suivant la revendication 1 ou 2, **caractérisé en ce que** les deuxièmes télégrammes (T21, T22) de test sont différents des premiers télégrammes (T11, T12) de test.

4. Réseau local suivant l'une des revendications précédentes, **caractérisé en ce que** tous les appareils (K1, K2, K3) de connexion, qui sont montés avec le gestionnaire (RM) de redondance suivant une topologie annulaire, sont constitués en gestionnaire de redondance-observateur.

5. Réseau local suivant l'une des revendications précédentes, **caractérisé en ce que** le gestionnaire (RM) de redondance est constitué de façon à indiquer dans les premiers télégrammes (T11, T12) de test l'état respectif « anneau séparé » ou « liaison fermée » et **en ce qu'**un appareil (K3) de connexion qui est voisin dans l'anneau du gestionnaire (RM) de redondance est constitué, en outre, en gestionnaire de redondance-observateur de façon à exploiter des télégrammes qu'il reçoit sur son accès (P32) relié au gestionnaire (RM) de redondance et à séparer l'anneau pour la production d'une topologie linéaire et à signaler une erreur lorsque plus que seulement des premiers télégrammes (T11) de test ont été reçus à cet accès (P32) et lorsqu'il a été indiqué, dans le premier télégramme (T11) de test reçu en dernier, l'état « anneau séparé » par le gestionnaire (RM) de redondance.

6. Appareil de connexion pour un réseau local suivant l'une des revendications précédentes, **caractérisé en ce qu'**il est constitué sous la forme de ce que l'on appelle un gestionnaire de redondance-observateur pour injecter dans l'anneau à des intervalles de temps prescrits des premiers télégrammes (T11, T12) de test par les deux accès (P41, P42) par lesquels il est monté dans l'anneau et, pour la production d'une topologie linéaire, à séparer l'anneau et à fermer la liaison d'une autre façon dans le cas où, dans un intervalle de temps prescrit, les premiers télégrammes (T11, T12) de test sont reçus à, respectivement, l'autre accès (P42, P41), **caractérisé en ce qu'**au moins l'un des appareils (K3) de connexion est constitué sous la forme de ce que l'on appelle un gestionnaire de redondance-observateur pour injecter dans l'anneau pour le contrôle du gestionnaire (RM) de redondance également dans des intervalles de temps prescrits des deuxièmes télégrammes (T21, T22) de test par les deux accès (P31, P32) par lesquels il est monté dans l'anneau et pour séparer l'anneau et fermer d'une autre façon la liaison entre les accès (P31, P32) pour la production d'une topologie linéaire dans le cas où les deuxièmes télégrammes (T21, T22) de test sont reçus dans un intervalle de temps prescrit à, respectivement, l'autre accès (P32, P31).
